# EUROPÄISCHE PATENTANMELDUNG

(11) **EP 0 918 152 A1**
(43) Veröffentlichungstag der Anmeldung: **26.05.1999**
(21) Anmeldenummer: 97810902.3
(22) Anmeldetag: 24.11.1997
(51) Int. Cl.: F02C 9/26, G10K 11/178, F02B 51/06, F23R 3/28, F23N 5/24, F23N 5/16, F23N 5/08

(54) **Verfahren und Vorrichtung zur Kontrolle thermoakustischer Schwingungen in einem Verbrennungssystem**

(71) Anmelder: ABB RESEARCH LTD., 8050 Zürich (CH)
(72) Erfinder: Gutmark, Ephraim Prof.,, Baton Rouge, LA 70810 (US); Paschereit, Christian Oliver, Dr.,, CH-5400 Baden (CH); Weisenstein, Wolfgang, CH 5453 Remetschwil (CH)
(74) Vertreter: Klein, Ernest

(57) **Zusammenfassung**

Eine Vorrichtung zur Kontrolle thermoakustischer Schwingungen in einem Verbrennungssystem mit einer Brennkammer und einem Brenner ist dadurch gekennzeichnet, daß im Bereich des Brenners Mittel zur akustischen Anregung des Arbeitsgases angeordnet sind.

## Beschreibung

Die Erfindung betrifft ein Verfahren und eine Vorrichtung zur Kontrolle thermoakustischer Schwingungen in einem Verbrennungssystem mit einer Brennkammer und einem Brenner.

### Stand der Technik

Thermoakustische Schwingungen stellen eine Gefahr für jede Art von Verbrennungsanwendungen dar. Sie führen zu Druckschwankungen hoher Amplitude, zu einer Einschränkung des Betriebsbereiches und können die mit der Verbrennung verbundenen Emissionen erhöhen. Diese Probleme treten besonders in Verbrennungssystemen mit geringer akustischer Dämpfung, wie sie moderne Gasturbinen oft darstellen, auf.

In herkömmlichen Brennkammern wirkt die in die Brennkammer einströmende Kühlluft schalldämpfend und trägt damit zur Dämpfung von thermoakustischen Schwingungen bei. Um niedrige NOₓ-Emissionen zu erzielen, wird in modernen Gasturbinen ein zunehmender Anteil der Luft durch die Brenner selbst geleitet und der Kühlluftstrom reduziert. Durch die damit einhergehende geringere Schalldämpfung treten die eingangs angesprochenen Probleme in solchen modernen Brennkammern demnach verstärkt auf.

Eine Möglichkeit der Schalldämpfung besteht im Ankoppeln von Helmholtz-Dämpfern in der Brennkammerhaube oder im Bereich der Kühlluftzuführung. Bei engen Platzverhältnissen wie sie für moderne, kompakt gebaute Brennkammern typisch sind, kann die Unterbringung solcher Dämpfer jedoch Schwierigkeiten bereiten und ist mit großem konstruktiven Aufwand verbunden.

### Darstellung der Erfindung

Hier setzt die Erfindung an. Es soll ein Vorrichtung zur Kontrolle thermoakustischer Schwingungen geschaffen werden, die thermoakustische Schwingungen wirkungsvoll unterdrückt und mit möglichst geringem konstruktiven Aufwand verbunden ist. Weiter soll ein wirkungsvolles Verfahren zur Kontrolle thermoakustischer Schwingungen geschaffen werden. Diese Aufgabe wird erfindungsgemäß durch das Verfahren zur Kontrolle thermoakustischer Schwingungen des unabhängigen Anspruchs 1 und die Vorrichtung zur Kontrolle thermoakustischer Schwingungen des unabhängigen Anspruchs 8 gelöst.

Kohärente Strukturen spielen eine entscheidende Rolle bei Mischungsvorgängen zwischen Luft und Brennstoff. Die räumliche und zeitliche Dynamik dieser Strukturen beeinflußt die Verbrennung und die Wärmefreisetzung. Der Erfindung liegt nun die Idee zugrunde, der Ausbildung kohärenter Strukturen entgegenzuwirken. Wird die Entstehung von Wirbelstrukturen am Brenneraustritt reduziert oder verhindert, so wird dadurch auch die periodische Wärmefreisetzungschwankung reduziert. Da die periodischen Wärmefreisetzungsschwankungen die Grundlage für das Auftreten thermoakustischer Schwingungen sind, wird die Amplitude der thermoakustischen Schwankungen dadurch reduziert.

Erfindungsgemäß wird in dem Verfahren zur Kontrolle thermoakustischer Schwingungen in einem Verbrennungssystem die sich im Bereich des Brenners ausbildende Scherschicht akustisch angeregt. Mit Scherschicht ist hier die Mischungsschicht bezeichnet, die sich zwischen zwei Fluidströmungen unterschiedlicher Geschwindigkeiten bildet.

Eine Beeinflussung der Scherschicht hat den Vorteil, daß eingebrachte Anregungen in der Scherschicht verstärkt werden. Somit wird zur Auslöschung eines vorhandenen Schallfelds nur wenig Anregungsenergie benötigt. Im Gegensatz dazu steht das Prinzip des Antischalls, bei dem ein vorhandenes Schallfeld durch ein phasenverschobenes Schallfeld gleicher Energie ausgelöscht wird.

Die Scherschicht kann erfindungsgemäß sowohl stromab als auch stromauf des Brenners angeregt werden. Stromab des Brenners kann die Scherschicht direkt angeregt werden. Bei Anregung stromauf des Brenners wird die akustische Anregung zunächst in das Arbeitsgas, beispielsweise Luft, eingebracht und überträgt sich dann nach Durchgang des Arbeitsgases durch den Brenner in die Scherschicht.

Da nur geringe Anregungsleistungen notwendig sind, kann die Schallenergie beispielsweise durch akustische Treiber, wie etwa Lautsprecher, in die Strömung eingebracht werden.

Alternativ können eine oder mehrere Kammerwände mechanisch zu Schwingungen bei der gewünschten Frequenz angeregt werden.

Bevorzugt wird die momentane akustische Anregung der Scherschicht mit einem in dem Verbrennungssystem gemessenen Signal phasengekoppelt. Dabei wird in dem Verbrennungssystem ein Signal gemessen, das mit den thermoakustischen Fluktuationen korreliert ist. Dieses Signal kann stromab des Brenners in der Brennkammer oder einer stromauf des Brenners angeordneten Beruhigungskammer gemessen werden. Es sind dann bevorzugt Mittel vorgesehen, die die momentane akustische Anregung als Funktion des Meßsignal steuern.

Durch die Wahl einer geeigneten, je nach Art des gemessenen Signals verschiedenen Phasendifferenz zwischen Meßsignal und momentanem akustischen Anregungssignal wirkt die akustische Anregung der Ausbildung kohärenter Strukturen entgegen, so daß die Amplitude der Druckpulsation verringert wird.

Vorteilhaft wird in dem Verbrennungssystem ein Drucksignal gemessen, das die mit den thermoakustischen Schwingungen verbunden Druckschwankungen aufnimmt. Dies kann etwa mit einem oder mehreren in der Brennkammer, der Beruhigungskammer oder an einer Wand einer der Kammern angeordneten Mikrophonen geschehen.

Eine andere Möglichkeit besteht im Messen eines optischen Signals, das mit den Wärmefreisetzungsschwankungen des Verbrennungsprozesses korreliert ist. Vorteilhaft wird dabei eine Chemilumineszenz-Emission gemessen, bevorzugt von einem der Radikale OH oder CH. Ein optisches Signal wird mit einem Sensor für sichtbare oder infrarote Strahlung aufgenommen, bevorzugt einer optischen Fasersonde.

Vorteilhaft wird das in dem Verbrennungssystem gemessene Signal gefiltert, phasengedreht und verstärkt, und das so gewonnene Signal als Eingangssignal für einen akustischen Treiber benutzt, der die momentane akustische Anregung der Scherschicht erzeugt. Falls notwendig, wird das Signal vor der Filterung verstärkt. Die Filterung unterdrückt ein störendes Rauschsignal und besteht vorzugsweise in einem Bandpassfilter. Die Phasendrehung berücksichtigt, daß in der Regel durch die Anordnung der Meßsensoren und akustischen Treiber, und durch die Meßgeräte und Leitungen selbst Phasenverschiebungen auftreten. Wird die relative Phase so gewählt, daß sich eine möglichst große Reduzierung der Druckamplituden ergibt, werden alle diese phasendrehenden Effekte implizit berücksichtigt. Der Wert der Phasendrehung kann, nach Bestimmung eines günstigen Wertes, fixiert bleiben. Da sich die günstigste relative Phase aber mit der Zeit ändern kann, bleibt die relative Phase vorteilhaft variabel und wird etwa über eine Kontrolle der Druckschwankungen so nachgeführt, daß stets eine große Unterdrückung gewährleistetet ist.

Der akustische Treiber kann ein in die Gasströmung eingebrachter akustischer Treiber wie etwa ein Lautsprecher sein. Alternativ erfolgt die akustische Anregung der Scherschicht durch eine mechanische Anregung der Wände der Brenn- oder Beruhigungskammer.

Die Erfindung soll nachfolgend anhand eines Ausführungsbeispiels im Zusammenhang mit den Zeichnungen näher erläutert werden. Es zeigen
- Fig. 1: ein Flußdiagramm einer Ausführungsform des erfindungsgemäßen Verfahrens zur Kontrolle thermoakustischer Schwingungen;
- Fig. 2: für ein Ausführungsbeispiel eine Auftragung der relativen Druckschwankung bezogen auf die Druckschwankung ohne Kontrolle (100 %) als Funktion der relativen Phase zwischen Meßsignal und momentaner akustischer Anregung;

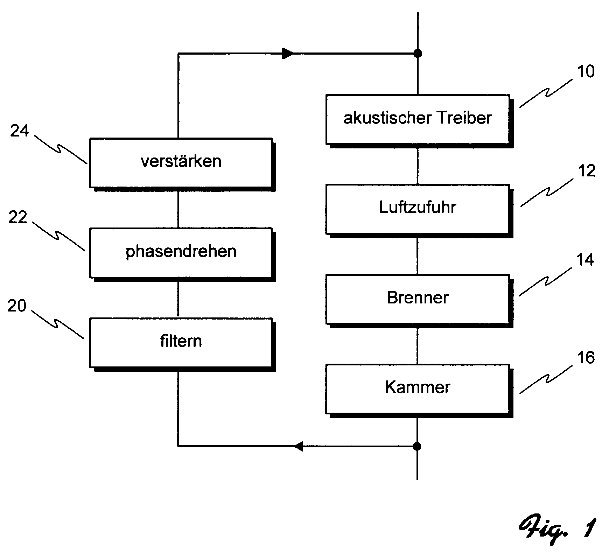

Ein Ausführungsbeispiel des erfindungsgemäßen Verfahrens wird anhand eines Flußdiagramm (Fig. 1) erläutert. Zur Ansteuerung des akustischen Treibers 10 wird eine geschlossene Kontrollschleife verwendet. Das in der Brennkammer 16 gemessene Druck- oder Lumineszenzsignal wird zur Rauschunterdrückung gefiltert (Bezugszeichen 20), phasengedreht (Bezugszeichen 22) und verstärkt (Bezugszeichen 24). Der akustische Treiber 10 bringt im Flußdiagramm von Fig. 1 die akustische Energie in die Luftzufuhr 12, also in die Strömung selbst ein. Werden durch den akustischen Treiber etwa die Brennkammerwände selbst zu Schwingungen angeregt, so entfällt das Element 12 im Flußdiagramm. An den Brenner 14 schließt sich die Kammer 16 an, die hier die Brennkammer umfaßt. In einer der Kammern des Verbrennungssystems (Beruhigungskammer oder Brennkammer) findet die Messung des oben erwähnten Druck- oder Lumineszenzsignals statt, wodurch die Kontrollschleife geschlossen wird.

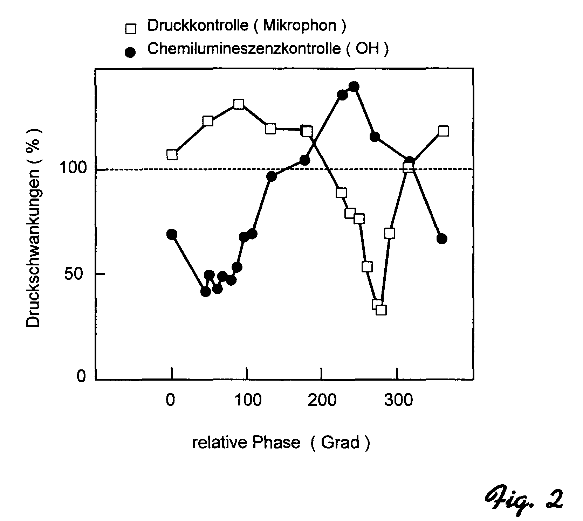

Figur 2 zeigt die Ergebnisse experimenteller Bestimmungen der Druckschwankungen in einem Ausführungsbeispiel, bei dem das Verbrennungssystem bei einer Frequenz von 104 Hz zu axialsymmetrischen thermoakustischen Schwankungen neigte. In Fig. 2 sind die Druckschwankungen unter Kontrolle eines Drucksignals (offene Quadrate) und eines OH-Lumineszenzsignals (volle Kreise) gezeigt, bezogen auf die Druckschwankungen ohne Kontrolle (100 %). Die akustische Anregung erfolgte durch innerhalb des Verbrennungssystems angeordnete Lautsprecher. Erste Versuche zeigten, daß eine akustische Anregung stromauf des Brenners effektiver war als eine Anregung stromab des Brenners, so daß die weiteren Experimente mit akustischer Anregung stromauf des Brenners durchgeführt wurden.

In einer ersten Betriebsart nahm ein B&K wassergekühltes Mikrophon die akustischen Resonanzen der Kammer auf. Die Signale wurden vorverstärkt, bandpass-gefiltert und phasengedreht. Die Phasendrehung wurde dabei systematisch zwischen 0° und 360° variiert. Das resultierende Signal bildete den Trigger für einen Signalgenerator, der die Lautsprecher über einen Audioverstärker ansteuerte. Figur 2 zeigt, daß die Druckamplituden bei geeignet gewählter relativer Phase um etwa 70% reduziert werden (offene Quadrate).

In einer zweiten Betriebsart wurde als Maß der Wärmefreisetzungsrate ein OH-Chemilumineszenzsignal durch zwei optische Faser-Sonden aufgenommen. Das Signal einer der Sonden wurde, wie bei der ersten Betriebsart beschrieben, zur Rückkopplung benutzt. In vorliegenden Ausführungsbeispiel wurde damit eine Reduktion der Druckamplituden um etwa 60% erreicht (volle Kreise). Die unterschiedlichen Werte für die Unterdrückung, und die für maximale Unterdrückung notwendige relativen Phasen bei den beiden Betriebsarten sind nach gegenwärtiger Kenntnis auf die verschiedene Positionen der entsprechenden Sensoren (Mikrophon bzw. Fasersonde) und die unterschiedlichen Arten der gemessenen Signale zurückzuführen.

## Patentansprüche

1. Verfahren zur Kontrolle thermoakustischer Schwingungen in einem Verbrennungssystem mit einer Brennkammer und einem Brenner,
bei dem die sich im Bereich des Brenners ausbildende Scherschicht akustisch angeregt wird.

2. Verfahren nach Anspruch 1,
bei dem die momentane akustische Anregung der Scherschicht mit einem in dem Verbrennungssystem gemessenen Signal phasengekoppelt wird.

3. Verfahren nach Anspruch 2,
bei dem das in dem Verbrennungssystem gemessene Signal gefiltert, phasengedreht und verstärkt wird, und das so gewonnene Signal eine akustische Quelle treibt, die die momentane akustische Anregung der Scherschicht erzeugt.

4. Verfahren nach Anspruch 2 oder 3,
bei dem das in dem Verbrennungssystem gemessene Signal ein Drucksignal ist.

5. Verfahren nach Anspruch 2 oder 3,
bei dem das in dem Verbrennungssystem gemessene Signal ein Chemilumineszenzsignal ist, bevorzugt ein Chemilumineszenzsignal von der Emission eines der Radikale OH oder CH.

6. Verfahren nach einem der vorigen Ansprüche,
bei dem die akustische Anregung der Schwerschicht durch eine mechanische Anregung der Brennkammerwände erfolgt.

7. Verfahren nach einem der Ansprüche 2 bis 6,
bei dem das in dem Verbrennungssystem gemessene Signal in der Brennkammer oder in einer Beruhigungskammer gemessen wird.

8. Vorrichtung zur Kontrolle thermoakustischer Schwingungen in einem Verbrennungssystem mit einer Brennkammer und einem Brenner, dadurch gekennzeichnet, daß
im Bereich des Brenners Mittel zur akustischen Anregung des Arbeitsgases angeordnet sind.

9. Vorrichtung nach Anspruch 8,
bei der besagte Mittel zur akustischen Anregung stromauf des Brenners angeordnet sind.

10. Vorrichtung nach einem der Ansprüche 8 oder 9,
bei der besagte Mittel zur akustischen Anregung zumindest eine Wand des Verbrennungssystems mechanisch in Schwingung versetzen.

11. Vorrichtung nach einem der Ansprüche 8 bis 10, weiter umfassend
einen oder mehrere in dem Verbrennungssystem angeordnete Sensoren zur Messung thermoakustischer Schwingungen, und
Mittel zur Steuerung des momentanen akustischen Anregung abhängig von dem Meßsignal besagter Sensoren.

12. Vorrichtung nach Anspruch 11,
bei der der eine oder die mehreren in dem Verbrennungssystem angeordneten Sensoren zur Messung thermoakustischer Schwingungen Drucksensoren, bevorzugt Mikrophone, besonders bevorzugt wassergekühlte Mikrophone, sind.

13. Vorrichtung nach Anspruch 11,
bei der der eine oder die mehreren in dem Verbrennungssystem angeordneten Sensoren zur Messung thermoakustischer Schwingungen optische Sensoren für sichtbare oder infrarote Strahlung, bevorzugt optische Fasersonden, sind.

14. Vorrichtung nach einem der Ansprüche 11 bis 13,
bei der die Mittel zur Steuerung der momentanen akustischen Anregung Mittel zum Filtern, Phasendrehen und Verstärken des Meßsignals besagter Sensoren umfassen.
